# EUROPEAN PATENT SPECIFICATION

(11) **EP 1 110 808 B1**
(45) Date of publication and mention of the grant of the patent: **02.06.2004**
(21) Application number: 00127732.6
(22) Date of filing: 18.12.2000
(51) Int. Cl.: B60N 2/36, B60N 2/42

(54) **An inflatable restraint device for the luggage space of a motor vehicle**
Aufblasbare Rückhaltevorrichtung für den Kofferraum eines Kraftfahrzeuges
Dispositif de retenue gonflable pour le compartiment à bagages d'un véhicule à moteur

(30) Priority: 23.12.1999 IT TO991143
(43) Date of publication of application: 27.06.2001
(73) Proprietor: FIAT AUTO S.p.A., 10135 Torino (IT)
(72) Inventor: Rosti Rossini, Lorenzo, 20145 Milano (IT)
(74) Representative: Quinterno, Giuseppe

(56) References cited:
- EP-A- 0 697 307
- DE-C- 4 436 139
- US-A- 6 004 084

## Description

The present invention relates to a restraint device for the luggage space of a motor vehicle arranged in an area behind the backrest of a rear seat (see, for example US-A-6 004 084, corresponding to the preamble of claim 1).

In the case of a frontal impact, any items contained in the luggage space can hit the back of the said rear seat or seats.

In the prior art, car seats immediately in front of the luggage space need to be made sufficiently robust and strong to be deformed only to a limited extent as a result of an impact from luggage or other items carried in the luggage space.

The manufacture of seats to a good standard from this point of view is therefore expensive.

One object of the present invention is to provide a restraint device which is able to alleviate the aforesaid problems which occur in the event of a vehicle being in a substantially frontal collision.

This and other objects are achieved according to the invention by providing a restraint device having the characteristics claimed in the appended Claim 1.

Further features of the invention are disclosed in the dependent claims.

Further characteristics and advantages of the invention will become apparent from the detailed description which follows, carried out purely by way of non-limitative example and with reference to the appended drawings, in which:
Figure 1 is a partial perspective view of the rear portion of a motor vehicle fitted with a restraint device according to the invention, shown in a deactivated state; and
Figure 2 is a similar view to that of Figure 1 showing a device according to the invention in an activated condition.

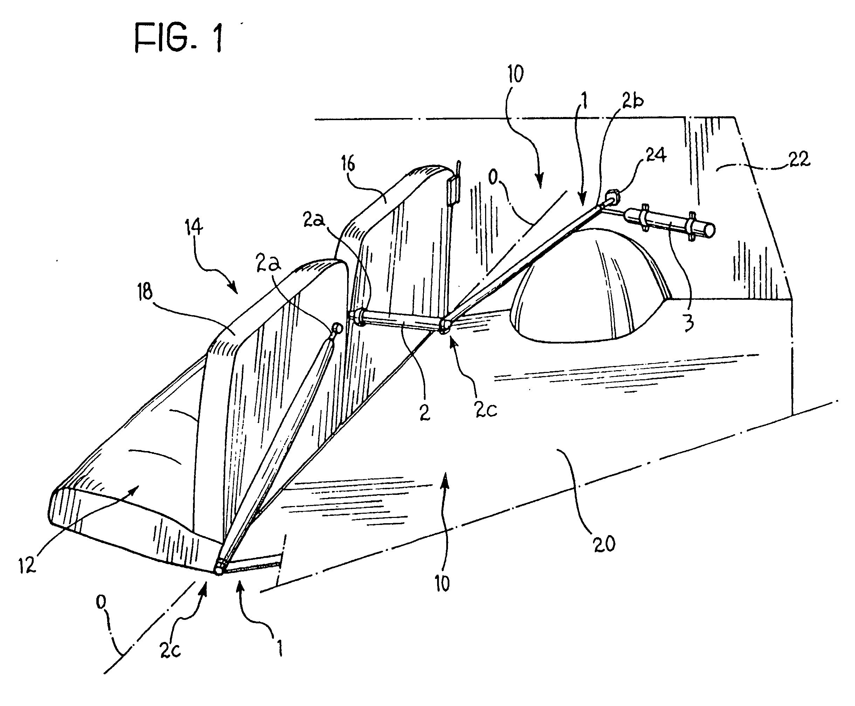

In Figure 1, the luggage space of a motor vehicle indicated by reference sign 10 is constituted by the space behind a backrest 12 of a rear seat 14 of a motor vehicle. In the embodiment shown by way of example, the backrest 12 is divided into two portions 16 and 18, which can be folded by pivoting about an axis, indicated 0-0.

The luggage space 10 is delimited at the front by the rear surfaces of the backrests 16 and 18, at the bottom by a flat or floor surface 20 and at the sides by the side walls 22 of the motor vehicle, of which only one is visible in the drawings.

In the embodiment illustrated, a restraint device, generally indicated 1, is associated with each portion 16 and 18 of the backrest 12 of the rear seat 14.

Each restraint device 1 includes an inflatable tubular element 2 with a first end portion 2a secured to the associated backrest portion 16 or 18, and a second end portion 2b secured to the adjacent side wall 22, at a point 24 which is longitudinally behind the back rest.

As seen in Figure 1, the inflatable tubular element 2 of each restraint device 1 is secured at an intermediate portion 2c to the bottom 20 (for example) of the luggage space 10 close to the pivoting axis O-O of the associated back rest. In particular, this intermediate portion 2c of the tubular element 2 is secured so as to be releasable on inflation of the said tubular element.

In the deactivated or rest state shown in Figure 1, the tubular elements 2 associated with the backrest portions 16 and 18 do not impede the folding down of these latter.

The end 2b of the tubular element 2 of each restraint element 1 is coupled to an inflating gas source 3, of a type known per se, such as the type used to inflate air bags, for example. Control means are associated with the inflation means, operable to activate the latter under certain predetermined conditions, which are detected by sensors and indicated that the vehicle has been in an at least partially frontal impact.

The inflatable tubular element 2 of each restraint device 1 is made in such a way that, when it is inflated, it is able to dilate radially and to contract longitudinally. This tubular element is manufactured, for example, using a technique described in the document "ITS-A New Restraint System for Side Impact Protection", by Y. Gershon et al., SAE, Technical Paper Series, No. 961018, International Congress and Exposition, Detroit, Michigan, February 26-29 1996.

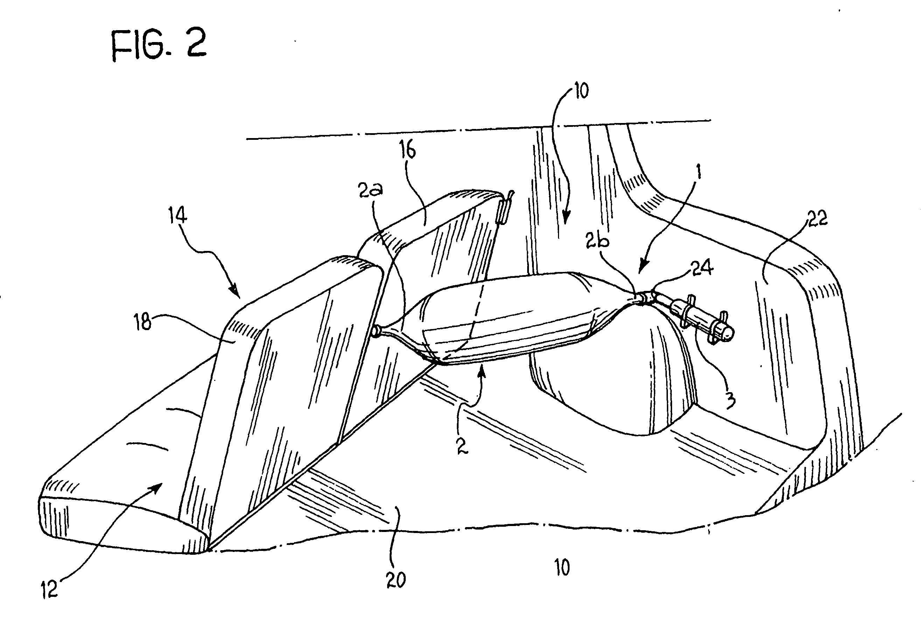

In the event of the motor vehicle being involved in an at least partially frontal impact, the gas generator 3 of each restraint device 1 is activated and inflates the associated tubular element 2, as shown in Figure 2.

As explained earlier, the tubular element 2 of a restraint device 1 is able, on inflation, to dilate radially and to contract longitudinally. On inflation, the intermediate portion 2c of each tubular element 2 is released, thereby taking on a rectilinear configuration and taking up a position in which it forms an angle with the longitudinal axis of the vehicle. Once inflated, since it has contracted longitudinally, the tubular element 2 of each restraint element is able, on the one hand, to counter the tendency of the associated backrest 16 and 18 to move forwards and, on the other, to brake or stop any movement towards the seat by luggage or other items placed loose in the luggage compartment 10.

In an alternative arrangement to that described above with reference to Figure 1, the inflated tubular element 2 of each restraint element can be partially incorporated into an associated back rest, beneath the upholstery thereof, which would preferably include a weakened portion, intended to tear in the event of the said tubular element being inflated.

In a similar way, the portion of the tubular element 2 between the secured portion 2c and the end 2b could be arranged beneath the cladding of the associated sidewall 2 of the passenger compartment.

## Claims

1. A restraint device (1) for the luggage space (10) of a motor vehicle, fitted in an area just behind the backrest (12; 16, 18) of a rear seat (14), this device (1) comprising at least one inflatable element (2) coupled to a source of inflating gas (3) to be activated in the event of the vehicle being in an impact; this device (1) being **characterised in that** the said element (2) is tubular with a first end portion (2a) secured to the said backrest (12;16,18) and a second end portion (2b) secured to a side wall (22) of the said luggage space (10) at a point (24) longitudinally to the rear of the backrest, the said tubular element (2) being operable, when inflated, to dilate radially and to contract longitudinally whereby, in the event of the vehicle being involved in at least partially frontal impact, it can oppose forwards movement by the backrest (12; 16, 18) and movement towards the backrest by luggage or the like placed unrestrained in the said luggage space (10).

2. A restraint device according to Claim 1, **characterised in that** the backrest (12; 16, 18) of the said seat (14) is pivotable about a substantially horizontal axis (O-O); the restraint device being **characterised in that** the inflatable tubular element (2) is releasably fixed at an intermediate portion (2c) thereof close to the pivoting axis (O-O) of said backrest (12; 16, 18).

3. A restraint device according to Claim 1 or Claim 2, **characterised in that** the said inflatable tubular element (2) extends parallel to the backrest (12; 16, 18) of the said seat (14) beneath a tearable layer of the upholstery of the said seat.

4. A restraint device according to any one of the preceding Claims, **characterised in that** the said inflatable tubular element (2) extends partially along a side wall (22) of the motor vehicle, beneath a tearable layer of the cladding of this side wall.

## Patentansprüche

1. Rückhaltevorrichtung (1) für den Kofferraum (10) eines Kraftfahrzeugs, welche in einem Bereich genau hinter der Lehne (12; 16, 18) eines hinteren Sitzes (14) angebracht ist, wobei diese Vorrichtung (1) zumindest ein aufblasbares Element (2) umfasst, welches an einer Pumpgasquelle (3) angekoppelt ist, die im Falle der Verwicklung des Fahrzeugs in einen Aufprall zu aktivieren ist, wobei diese Vorrichtung (1) **dadurch gekennzeichnet ist, dass** das Element (2) röhrenförmig ist, wobei ein erstes Endteil (2a) an der Lehne (12; 16, 18) befestigt ist und ein zweites Endteil (2b) an einem Punkt (24), der längs zur Rückseite der Lehne liegt, an einer Seitenwand (22) des Kofferraums (10) befestigt ist, und das röhrenförmige Element (2) dazu betreibbar ist, sich radial auszudehnen und der Länge nach zusammenzuziehen, wenn es aufgeblasen wird, wobei es im Falle einer Verwicklung des Fahrzeugs in einen zumindest teilweise frontalen Aufprall einer Vorwärtsbewegung der Lehne (12; 16, 18) entgegenwirken kann, sowie einer Bewegung hin zur Lehne, die vom Gepäck oder von ähnlichen, unbefestigt im Kofferraum (10) platzierten Dingen durchgeführt wird.

2. Rückhaltevorrichtung gemäß Anspruch 1, **dadurch gekennzeichnet, dass** die Lehne (12; 16, 18) des Sitzes (14) um eine im Wesentlichen horizontale Achse (O-O) schwenkbar ist; wobei die Rückhaltevorrichtung **dadurch gekennzeichnet ist, dass** das aufblasbare röhrenförmige Element (2) lösbar an einem Zwischenteil (2c) befestigt ist, und zwar in der Nähe der Schwenkachse (O-O) dieser Lehne (12; 16, 18).

3. Rückhaltevorrichtung gemäß Anspruch 1 oder Anspruch 2, **dadurch gekennzeichnet, dass** sich das aufblasbare röhrenförmige Element (2) parallel zur Lehne (12; 16, 18) des Sitzes (14) erstreckt, und zwar unter einer zerreißbaren Schicht der Polsterung dieses Sitzes.

4. Rückhaltevorrichtung gemäß einem der vorhergehenden Ansprüche, **dadurch gekennzeichnet, dass** sich das aufblasbare röhrenförmige Element (2) teilweise entlang einer Seitenwand (22) des Kraftfahrzeugs erstreckt, und zwar unter einer zerreißbaren Schicht der Verkleidung dieser Seitenwand.

## Revendications

1. Dispositif (1) de retenue pour espace à bagages (10) d'un véhicule à moteur, placé dans une région qui se trouve juste derrière le dossier (12 ; 16, 18) d'un siège arrière (14), ce dispositif (1) comprenant au moins un élément gonflable (2) couplé à une source de gaz de gonflage (3) destinée à être activée en cas d'impact du véhicule, le dispositif (1) étant **caractérisé en ce que** l'élément (2) est tubulaire avec une première partie d'extrémité (2a) fixée au dossier (12 ; 16, 18) et une seconde partie d'extrémité (2b) fixée à une paroi latérale (22) de l'espace à bagages (10) à un emplacement (24) qui se trouve longitudinalement en arrière du dossier, l'élément tubulaire (2), lorsqu'il est gonflé, étant destiné à se dilater radialement et à se contracter longitudinalement, si bien que, en cas de choc au moins partiellement frontal du véhicule, il peut s'opposer au déplacement vers l'avant du dossier (12 ; 16, 18) et au déplacement vers le dossier des bagages et analogues placés sans retenue dans l'espace à bagages (10).

2. Dispositif de retenue selon la revendication 1, **caractérisé en ce que** le dossier (12 ; 16, 18) du siège (14) peut pivoter autour d'un axe pratiquement horizontal (O-O), le dispositif de retenue étant **caractérisé en ce que** l'élément tubulaire gonflable (2) est fixé de façon temporaire à une partie intermédiaire (2c) de lui-même à proximité de l'axe de pivotement (O-O) du dossier (12 ; 16, 18).

3. Dispositif de retenue selon la revendication 1 ou 2, **caractérisé en ce que** l'élément tubulaire gonflable (2) s'étend parallèlement au dossier (12 ; 16, 18) du siège (14) sous une couche de garniture du siège qui peut être déchirée.

4. Dispositif de retenue selon l'une quelconque des revendications précédentes, **caractérisé en ce que** l'élément tubulaire gonflable (2) s'étend partiellement le long d'une paroi latérale (22) du véhicule à moteur, sous une couche de revêtement de cette paroi latérale qui peut être déchirée.
